# EUROPEAN PATENT SPECIFICATION

(11) **EP 0 684 393 B1**
(45) Date of publication and mention of the grant of the patent: **13.01.1999**
(21) Application number: 95107491.3
(22) Date of filing: 16.05.1995
(51) Int. Cl.: F16B 5/02, E05F 11/38, B60J 1/17

(54) **Vehicle door window regulator device and door featuring such a device**
Regelvorrichtung für Fenster einer Fahrzeugtür und damit ausgerüstete Tür
Dispositif régulateur pour fenêtre e porte de véhicle et porte munie d'un tel dispositif

(30) Priority: 24.05.1994 IT TO940426
(43) Date of publication of application: 29.11.1995
(73) Proprietor: ATOMA ROLTRA S.p.A., 86077 Pozzilli (IS) (IT)
(72) Inventor: Bergesio, Giuseppe, I-12042 Bra (IT)
(74) Representative: Franzolin, Luigi

(56) References cited:
- EP-A- 0 164 695
- EP-A- 0 304 583

## Description

The present invention relates to a vehicle door window regulator device, particularly for convertible passenger cars, and to a door featuring such a device.

As is known, normal car doors present an upper window frame defined by a pair of posts constituting the channels for guiding the window as it moves up and down, and by a cross member defining an upper stop for the window. Contact between the cross member and the top edge of the window ensures the window is always closed in the correct position even if positioned incorrectly during its upward travel.

Convertible passenger car doors, on the other hand, have no window frame, and normally feature a window regulator device wherein the window is guided solely by two shoes fitted to the bottom corners of the window and sliding along respective channels housed in the door. Each shoe is fitted to the window by means of a device for adjusting the position of the window in a plane substantially parallel to the channels, and which, according to one known solution, consists of a pin fitted to the shoe and in radially slack manner inside a through hole in the window, and having a threaded connecting element for frictionally fastening the window in the correct position in relation to the shoe by means of a nut or ring nut.

Known window regulator devices of the type briefly described above present several drawbacks.

Firstly, when first adjusting the position of the window, this is not supported positively by the shoes and must therefore be supported by hand until it is fastened in position.

Secondly, if the lock nut of either one of the adjusting devices should work loose, this may result in incorrect positioning of the window, which is in no way corrected in that the window is not guided directly and no upper stop exists for ensuring the window is closed in the correct position.

EP-A-0 304 583 discloses a window regulator according to the preamble of claim 1 and including, in particular, an eccentric type adjusting mechanism, in which an adjusting pin rotatable in a window shoe is provided with an eccentric screw for connection with a window supporting bracket.

However, the window is not completely guided when the screw is released; moreover, the mechanism includes a relatively high number of parts.

It is an object of the present invention to provide a vehicle door window regulator device designed to overcome the aforementioned drawbacks.

This object is achieved by a window regulator device having the features referred to in the preamble of claim 1 and known from EP-A-0 304 583, characterised in that the pin presents an eccentric portion positively engaging a respective hole in said window.

Developments in line with claim 1 are referred to in the dependent claims 2 to 5.

The invention further relates to a vehicle door comprising such a vehicle door window regulating device.

A preferred, non-limiting embodiment of the present invention will be described by way of example with reference to the accompanying drawings, in which:
Figure 1 shows a partial view, with parts removed for clarity, of a convertible passenger car door featuring a window regulator device in accordance with the teachings of the present invention;
Figure 2 shows a larger-scale section along line II-II in Figure 1;
Figure 3 shows an exploded view of a detail in Figure 2;
Figure 4 shows a front view of a component in Figure 3.

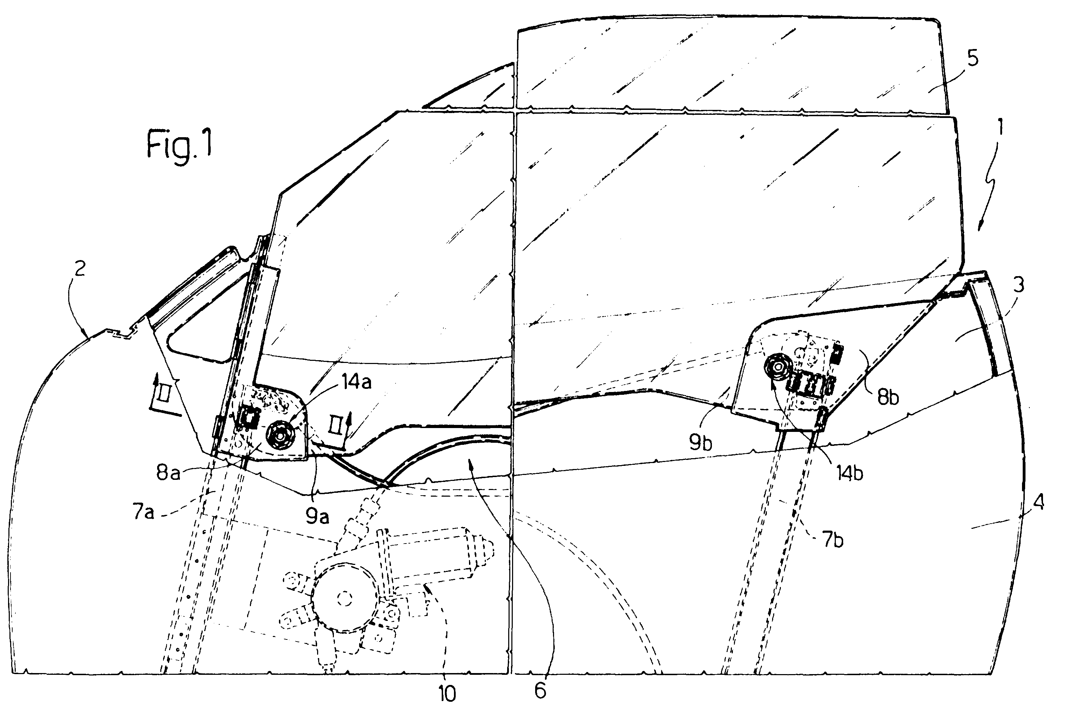

Number 1 in Figure 1 indicates a convertible passenger car door.

Door 1 comprises a box body 2 defined by an outer vehicle body element 3 and by an inner cover panel 4; a window 5; and a window regulator device 6 for moving window 5 between a lowered position (not shown) wherein it is housed inside body 2, and a raised position wherein it projects upwards from body 2.

Window regulator device 6 substantially comprises a pair of substantially parallel channels 7a, 7b fitted inside body 2; and two shoes 8a, 8b fitted to respective bottom lateral portions 9a, 9b of the window and sliding along respective channels 7a, 7b.

Device 6 also comprises an electrical unit 10 for operating window 5, and which is not described by virtue of being a known type not forming part of the present invention.

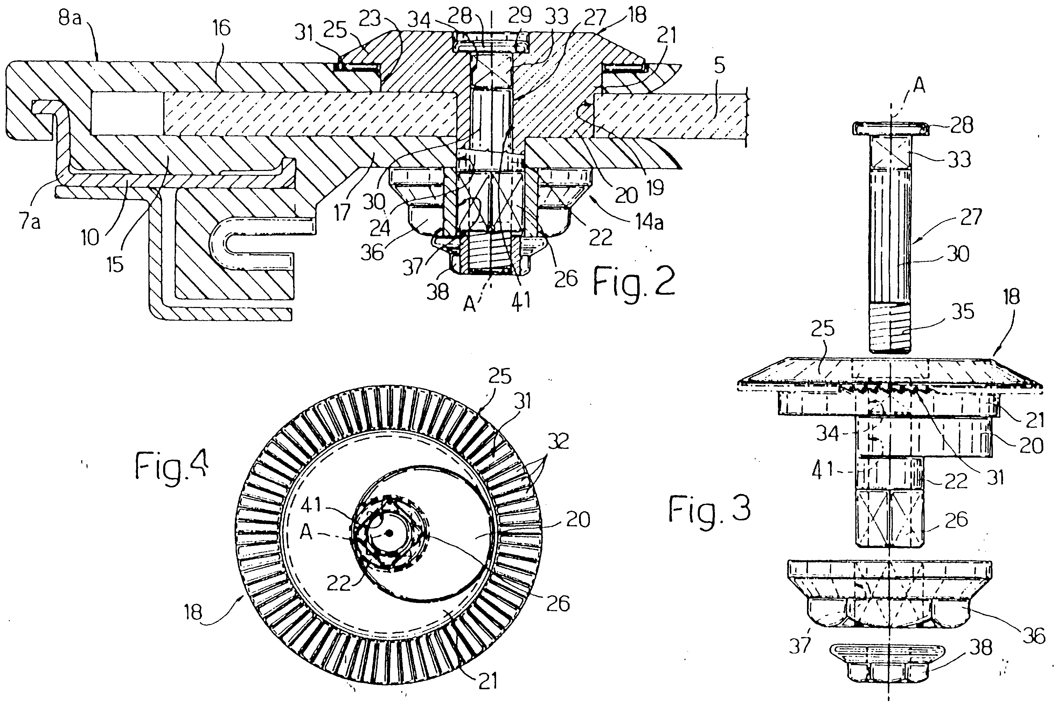

Window 5 is connected to shoes 8a, 8b by means of respective adjusting devices 14a, 14b. As these are identical, only device 14a relative to shoe 8a in Figure 2 will be described below, though the same description is understood as also applying to device 14b.

As shown in Figure 2, shoe 8a presents a portion 15 for connection to window 5 and defined by two spaced walls 16, 17 between which portion 9a of window 5 is inserted.

Device 14a substantially comprises a pin 18 fitted to walls 16, 17 and through a hole 19 in window 5.

According to the present invention, pin 18 rotates, in relation to shoe 8a, about its own axis A substantially perpendicular to window 5, and presents a cylindrical portion 20 eccentric in relation to axis A and positively engaging hole 19 in window 5.

More specifically (Figures 3 and 4), pin 18 comprises a further two cylindrical portions 21, 22 having axis A, and the diameters of which are respectively greater than the maximum eccentricity and equal to the minimum eccentricity of portion 20. Portions 21, 22 are located on opposite axial sides of portion 20, and engage in angularly-free manner respective holes 23, 24 in respective walls 16, 17 of shoe 8a.

Pin 18 also comprises an end flange 25 adjacent to cylindrical portion 21 and cooperating axially with wall 16 of shoe 8a; and a prismatic shank 26 defining the opposite end of pin 18, extending axially from cylindrical portion 22, and presenting a substantially square cross section with a diagonal equal to the diameter of cylindrical portion 22.

Pin 18 presents an axial through hole 41 for housing a screw 27 which in turn presents a shank 30, and a head 28 cooperating axially with a shoulder 29 formed inside pin 18 close to the end of pin 18 defined by flange 25. Shank 30 presents a square-section portion 33 adjacent to head 28 and which prismatically engages a square-section portion 34 of hole 41 in pin 18 to prevent screw 27 from rotating in relation to pin 18.

The end 35 of shank 30 opposite head 28 is threaded and projects axially from prismatic shank 26.

Device 14a also comprises a manually adjusted ring nut 36 which prismatically engages pin 18 by means of a square-section axial through hole 37 engaged by shank 26 of pin 18, and which cooperates axially with wall 17 of shoe 8a.

Finally, device 14a comprises a lock nut 38, conveniently a self-locking nut, which screws on to the threaded end 35 of screw 27, and cooperates axially with ring nut 36.

The mutually contacting annular portions of flange 25 of pin 18 and wall 16 of shoe 8a present respective toothed portions 31 cooperating mutually to permit one-way rotation of pin 18 in relation to shoe 8a, and defined by respective numbers of complementary, saw-tooth-section radial teeth 32.

Teeth 32 of portions 31 are conveniently so inclined as to prevent rotation of pin 18 in the loosening direction in relation to nut 38. In actual use, to adjust the position of window 5, lock nuts 38 must be loosened sufficiently to permit mutual slide of toothed portions 31 of flanges 25 and shoes 8a, 8b; and actual adjustment is made by simultaneously rotating both ring nuts 36 - and hence pins 18 prismatically engaging them - in the direction permitted by toothed portions 31 (anticlockwise in Figures 1 and 4). Rotation of pins 18 produces an eccentric shift of respective portions 20 about-respective axes A, and hence a corresponding shift of window 5 in the plane perpendicular to axis A. Once positioned correctly, window 5 is locked in place by successively tightening nuts 38 of devices 14a, 14b. As each nut 38 is tightened, the respective screw is locked angularly by locking ring nut 36 which is angularly integral with the screw by virtue of both prismatically engaging respective pin 18.

The advantages of the window regulator device according to the present invention are as follows.

In particular, by virtue of eccentric portions 20 engaging the respective holes in window 5 with no radial clearance, window 5 is positively supported by pins 18 even during initial adjustment.

Moreover, as the center distance of eccentric portions 20 of pins 18 is fixed by being defined by the center distance of holes 19 in window 5, the angular position of one pin 18 automatically determines the angular position of the other. This provides for two advantages: firstly, during initial adjustment, once one of the devices is locked, the position of the window is defined, thus enabling the user to proceed freely to lock the second device with no intervention required on either the window or the already locked device; secondly, in the event either one of devices 14a, 14b should work loose, the other is fully capable on its own of ensuring the correct position of the window.

Finally, by permitting rotation of pins 18 in the same direction, toothed portions 31 provide for preventing undesired stress and possible breakage of window 5 as a result of ring nuts 36 being rotated in opposite directions. In addition, toothed portions 31 also contribute towards preventing screw 27 from working loose in relation to nut 38; and prevent pins 18 from rotating in relation to respective shoes 8a, 8b - and hence any variation in the position of window 5 - even in the event of nuts 38 working loose, and at least as long as the nuts do not work so loose as to permit teeth 32 of pin 18 to disengage entirely from those of respective shoe 8a, 8b.

Clearly, changes may be made to door 1 and window regulator device 6 as described and illustrated herein without, however, departing from the scope of the present invention.

In particular, screw 27 may be integral with pin 18; toothed portions 31 may be dispensed with or replaced by knurled portions to prevent unscrewing; and pin 18 may be rotated directly, e.g. using a screwdriver as opposed to ring nuts 36.

Finally, the window regulator device may comprise only one channel and one shoe, and be fitted to any type of door.

## Claims

1. A vehicle door window regulator device (6); the door (1) comprising a box body (2), and a window (5) movable between a lowered or open position wherein it is housed inside said box body (2), and a raised or closed position wherein it projects upwards from said box body (2); said window regulator device (6) comprising at least one channel (7a, 7b) housed inside said box body (2); a shoe (8a, 8b) sliding along said channel (7a, 7b); and an eccentric adjusting device (14) connecting a portion (9a, 9b) of said window (5) to said shoe (8a, 8b); said adjusting device (14a, 14b) comprising a pin (18) fitted to said shoe (8a, 8b) and rotatable about its axis (A) in relation to said shoe (8a, 8b), and lock means (27, 38) for locking said window (5) in an adjustable position in relation to said shoe (8a, 8b);
characterized in that said pin (18) presents an eccentric portion (20) positively engaging a respective hole (19) in said window (5).

2. A device as claimed in Claim 1, characterized in that said lock means comprise a screw (27) at least angularly integral with said pin (18); and a lock nut (38) screwed on to said screw (27), and which provides for gripping together said window (5) and said shoe (8a, 8b).

3. A device as claimed in Claim 1 or 2, characterized in that said adjusting device comprises a manually adjusted ring nut (36) prismatically engaging said pin (18).

4. A device as claimed in any one of the foregoing Claims, characterized in that said pin (18) of said adjusting device (14a, 14b) presents an end flange (25) opposite said nut (38) and cooperating with a wall (16) of said shoe (8a); the mutually contacting annular portions of said flange (25) and said wall (16) presenting respective notches (31) cooperating mutually to permit one-way rotation of said pin (18) in relation to said shoe (8a).

5. A device as claimed in any one of the foregoing Claims, characterized by comprising two substantially parallel channels (7a, 7b); two shoes (8a, 8b) sliding along said channels (7a, 7b); and two adjusting devices (14a, 14b) connecting respective lateral portions (9a, 9b) of said window (5) to respective said shoes (8a, 8b).

6. A vehicle door (1), particularly for convertible passenger cars, comprising a box body (2); a window (5); and a window regulator device (6) for moving said window (5) between a lowered or open position wherein it is housed inside said box body (2), and a raised or closed position wherein it projects upwards from said box body (2); said window regulator device (6) comprising at least one channel (7a, 7b) housed inside said box body (2); a shoe (8a, 8b) sliding along said channel (7a, 7b); and an adjusting device (14a, 14b) connecting a portion (9a, 9b) of said window (5) to said shoe (8a, 8b); and said adjusting device (14a, 14b) comprising a pin (18) fitted to said shoe (8a, 8b) and rotating about its axis (A) in relation to said shoe (8a,8b); and lock means (27, 38) for locking said window (5) in an adjustable position in relation to said shoe (8a, 8b);
characterized in that said pin (18) presents an eccentric portion (20) positively engaging said respective hole (19) in said window (5).

## Patentansprüche

1. Steuerungsvorrichtung (6) für Fenster einer Fahrzeugtüre (1), die einen Gehäusekörper (2) und ein Fenster (5) umfaßt, das zwischen einer heruntergelassenen oder offenen Stellung, in der es sich innerhalb des Gehäusekörpers (2) befindet, und einer angehobenen oder geschlossenen Stellung, in der es vom Gehäusekörper (2) nach oben absteht, bewegbar ist; wobei die Fenstersteuerungsvorrichtung (6) wenigstens einen innerhalb des Gehäusekörpers (2) befindlichen Kanal (7a, 7b), einen entlang dem Kanal (7a, 7b) gleitenden Schuh (8a, 8b) und eine exzentrische Justiervorrichtung (14), die einen Teil (9a, 9b) des Fensters (5) mit dem Schuh (8a, 8b) verbindet, umfaßt; und wobei die Justiervorrichtung (14a, 14b) einen Stift (18), der im Schuh (8a, 8b) montiert und um seine Achse (A) relativ zum Schuh (8a, 8b) drehbar ist, und eine Verriegelungseinrichtung (27, 38) zum Festlegen des Fensters (5) in einer justierbaren Position in Bezug zum Schuh (8a, 8b) umfaßt;
dadurch gekennzeichnet, daß der Stift einen exzentrischen Teil (20) aufweist, der ohne Spiel in ein jeweiliges Loch (19) im Fenster (5) eingreift.

2. Vorrichtung nach Anspruch 1, dadurch gekennzeichnet, daß die Verriegelungseinrichtung eine Schraube (27), die zumindest winkelmäßig integral mit dem Stift (18) ausgebildet ist, und eine auf diese Schraube (27) geschraubte Arretiermutter (38), die für das Zusammengreifen des Fensters (5) und des Schuhs (8a, 8b) sorgt, umfaßt.

3. Vorrichtung nach Anspruch 1 oder 2, dadurch gekennzeichnet, daß die Justiervorrichtung eine manuell justierbare Ringmutter (36) umfaßt, die prismatisch am Stift (18) angreift.

4. Vorrichtung nach einem der vorhergehenden Ansprüche, dadurch gekennzeichnet, daß der Stift (18) der Justiervorrichtung (14a, 14b) einen der Mutter (38) gegenüberliegenden und mit einer Wand (16) des Schuhs (8a) zusammenwirkenden Endflansch (25) aufweist und die sich gegenseitig berührenden ringförmigen Teile des Flanschs (25) und der Wand (16) jeweilige, gegenseitig zusammenwirkende Nuten (31) aufweisen, die eine Drehung des Stifts (18) relativ zum Schuh (8a) in einer Richtung ermöglichen.

5. Vorrichtung nach einem der vorhergehenden Ansprüche, dadurch gekennzeichnet, daß sie zwei im wesentlichen parallele Kanäle (7a, 7b), zwei Schuhe (8a, 8b), die entlang diesen Kanälen (7a, 7b) gleiten, und zwei Justiervorrichtungen (14a, 14b), die jeweilige Seitenteile (9a, 9b) des Fensters (5) mit jeweils einem der Schuhe (8a, 8b) verbinden, umfaßt.

6. Fahrzeugtüre (1), insbesondere für Personenwagen mit aufklappbarem Dach, umfassend einen Gehäusekörper (2), ein Fenster (5), eine Fenstersteuerungsvorrichtung (6) zum Bewegen des Fensters (5) zwischen einer heruntergelassenen oder offenen Stellung, in der es sich innerhalb des Gehäusekörpers (1) befindet, und einer angehobenen oder geschlossenen Stellung, in der es vom Gehäusekörper (2) nach oben absteht; wobei die Fenstersteuerungsvorrichtung (6) wenigstens einen innerhalb des Gehäusekörpers (2) befindlichen Kanal (7a, 7b), einen entlang dem Kanal (7a, 7b) gleitenden Schuh (8a, 8b) und eine Justiervorrichtung (14a, 14b), die einen Teil (9a, 9b) des Fensters (5) mit dem Schuh (8a, 8b) verbindet, umfaßt; und wobei die Justiervorrichtung (14a, 14b) einen Stift (18) umfaßt, der im Schuh (8a, 8b) montiert und um seine Achse (A) relativ zum Schuh (8a, 8b) drehbar ist, und Verriegelungsmittel (27, 38) zum Festlegen des Fensters (5) in einer justierbaren Position in Bezug zum Schuh (8a, 8b) umfaßt;
dadurch gekennzeichnet, daß der Stift (18) einen exzentrischen Teil (20) aufweist, der ohne Spiel in das jeweilige Loch (19) im Fenster (5) eingreift.

## Revendications

1. Dispositif lève-vitre de porte de véhicule (6), la porte (1) comprenant un corps caisson (2) et une vitre (5) mobile entre une position baissée ou ouverte, dans laquelle elle est logée à l'intérieur du corps caisson (2), et une position levée ou fermée, dans laquelle elle fait saillie du corps caisson (2) vers le haut, ce dispositif lève-vitre (6) comprenant au moins une gouttière (7a, 7b) logée à l'intérieur du corps caisson (2), un patin (8a, 8b) glissant le long de cette gouttière (7a, 7b) et un dispositif excentrique de réglage (14) reliant une partie (9a, 9b) de la vitre (5) au patin (8a, 8b), ce dispositif de réglage (14a, 14b) comprenant une broche (18) montée sur le patin (8a, 8b) et pouvant tourner autour de son axe (A) par rapport au patin (8a, 8b), et des moyens de blocage (27, 38) pour le blocage de la vitre (5) dans une position réglable par rapport au patin (8a, 8b),
caractérisé par le fait que la broche (18) présente une partie excentrique (20) qui est en prise positivement avec un trou correspondant (19) fait dans la vitre (5).

2. Dispositif selon la revendication 1, caractérisé par le fait que les moyens de blocage comprennent une vis (27) faisant corps au moins angulairement avec la broche (18) et un contre-écrou (38) vissé sur cette vis (27) et produisant l'étreinte de la vitre (5) par le patin (8a, 8b).

3. Dispositif selon l'une des revendications 1 et 2, caractérisé par le fait que le dispositif de réglage comprend un écrou à embase réglé manuellement (36) qui est en prise prismatiquement avec la broche (18).

4. Dispositif selon l'une des revendications précédentes, caractérisé par le fait que la broche (18) du dispositif de réglage (14a, 14b) présente une bride d'extrémité (25) opposée à l'écrou (38) et coopérant avec une paroi (16) du patin (8a), les parties annulaires en contact mutuel de la bride (25) et de la paroi (16) présentant des encoches respectives (31) qui coopèrent mutuellement pour permettre une rotation dans un seul sens de la broche (18) par rapport au patin (8a).

5. Dispositif selon l'une des revendications précédentes, caractérisé par le fait qu'il comprend deux gouttières sensiblement parallèles (7a, 7b), deux patins (8a, 8b) glissant le long de ces gouttières (7a, 7b) et deux dispositifs de réglage (14a, 14b) qui relient des parties latérales respectives (9a, 9b) de la vitre (5) aux patins respectifs (8a, 8b).

6. Porte de véhicule (1), en particulier pour voitures particulières décapotables, comprenant un corps caisson (2), une vitre (5) et un dispositif lève-vitre (6) pour mouvoir cette -vitre (5) entre une position baissée ou ouverte, dans laquelle elle est logée à l'intérieur du corps caisson (2), et une position levée ou fermée, dans laquelle elle fait saillie du corps caisson (2) vers le haut, ce dispositif lève-vitre (6) comprenant au moins une gouttière (7a, 7b) logée à l'intérieur du corps caisson (2), un patin (8a, 8b) glissant le long de cette gouttière (7a, 7b), et un dispositif de réglage (14a, 14b) reliant une partie (9a, 9b) de la vitre (5) au patin (8a, 8b), ce dispositif de réglage (14a, 14b) comprenant une broche (18) montée sur le patin (8a, 8b) et tournant autour de son axe (A) par rapport au patin (8a, 8b), et des moyens de blocage (27, 38) pour le blocage de la vitre (5) dans une position réglable par rapport au patin (8a, 8b),
caractérisée par le fait que la broche (18) présente une partie excentrique (20) qui est en prise positivement avec un trou correspondant (19) fait dans la vitre (5).
